# EUROPÄISCHE PATENTANMELDUNG

(11) **EP 4 538 815 A1**
(43) Veröffentlichungstag der Anmeldung: **16.04.2025**
(21) Anmeldenummer: 24205166.2
(22) Anmeldetag: 08.10.2024
(51) Int. Cl.: G05B 19/418, G05B 19/05

(54) **VERFAHREN ZUM BEREITSTELLEN VON BETRIEBSDATEN EINES TRANSPORTSYSTEMS IN EINER MASCHINENLINIE**

(30) Priorität: 13.10.2023 DE 102023128054
(71) Anmelder: Krones AG, 93073 Neutraubling (DE)
(72) Erfinder: Bielmeier, Jonas, 93073 Neutraubling (DE); Strauss, Johannes, 93073 Neutraubling (DE); Meyknecht, Christian, 93073 Neutraubling (DE)
(74) Vertreter: Grünecker Patent- und Rechtsanwälte PartG mbB

(57) **Zusammenfassung**

Eine Ausführungsform der Erfindung betrifft ein Verfahren zum Bereitstellen von Betriebsdaten eines Transportsystems in einer Maschinenlinie, insbesondere in einer Maschinenlinie zum Abfüllen und Verpacken von Lebensmitteln und/oder Getränken bereitgestellt. Die Maschinenlinie umfasst eine Vielzahl von Maschinen und wenigstens ein Transportsystem. Mindestens ein Materialfluss der Maschinenlinie umfasst das Transportsystem und mindestens eine der Maschinen. Das Transportsystem umfasst ein oder mehrere Geräte. Das Verfahren startet mit dem Erstellen eines oder mehrerer funktionalen Module. Jedes des einen oder der mehreren funktionalen Module erfüllt eine bestimmte standardisierte Funktion innerhalb der Maschinenlinie. Jedes des einen oder der mehreren funktionalen Module repräsentiert eines oder mehrere der Geräte entlang eines Materialflusses innerhalb der Maschinenlinie funktional. Danach wird für jedes des einen oder der mehreren funktionalen Module eine standardisierte speicherprogrammierbare Steuerungs-, SPS-, Schnittstelle zum Ausgeben von standardisierten Informationen als die Betriebsdaten des funktionalen Moduls bereitgestellt. Die Betriebsdaten umfassen einen Status, einen Betriebsparameter oder eine Fehlermeldung des funktionalen Moduls.

## Beschreibung

Die Erfindung betrifft ein Verfahren zum Bereitstellen von Betriebsdaten eines Transportsystems in einer Maschinenlinie, sowie eine Maschinenlinie mit einem Transportsystem, insbesondere eine Maschinenlinie zum Abfüllen und Verpacken von Lebensmitteln und/oder Getränken.

Heutige Abfüll- und Verpackungsanlagen in der Getränke- und Flüssignahrungsmittelindustrie sind hoch optimiert und verarbeiten bis zu 120.000 Einheiten pro Stunde. Eine typische Abfüll- und Verpackungsanlage umfasst eine Vielzahl verschiedener Maschinen und Module, die über Transportbänder miteinander verbunden sind. Die Einheiten, wie beispielsweise Flaschen, Dosen, Paletten, Gebinde oder ähnliches werden dabei von einer Maschine zur nächsten transportiert und durchlaufen die einzelnen Maschinen der Linie in einer vorgegebenen Reihenfolge.

Der Ausfall einer einzelnen Maschine in einer solchen Maschinenlinie stellt eine Störung dar die sich entlang des Materialflusses ausbreitet und dabei weitere Maschinen zum Stillstand zwingt. Um die Leistung auf einem hohen Niveau zu halten, muss ein kontinuierlicher Analyseprozess stattfinden, um Schwachstellen innerhalb der Linie zu identifizieren und konsequent zu beheben.

Es ist daher wichtig, bei einer Störung von mehreren Maschinen so schnell wie möglich die Maschine oder Zwischenbereiche zwischen zwei benachbarten Maschinen in der Linie zu identifizieren, die für den Stillstand der Linie oder des Teils der Linie verantwortlich ist. Bisher war diese Aufgabe hauptsächlich durch Fachwissen zu bewältigen, indem ein Experte der komplexen Maschinenlinie die Anlage basierend auf Erfahrung untersuchte, um den Fehler zu identifizieren. Dieses manuelle Vorgehen ist jedoch meistens geprägt von Erfahrungswerten und ist üblicherweise zeitintensiv.

Abfülllinien bestehen aus Maschinen (Füller, Etikettiermaschine, Reinigungsmaschine, Pasteur, Packer, Belader, usw.) sowie einem Netzwerk aus Transporteuren und an diese angebundene "kleinere" Geräte, wie Datierungssysteme, Kartonverschließer, Leergebindespeicher etc. Das Netzwerk aus Transporteuren und den kleineren Geräten wird nachfolgend "Transportsystem" genannt.

Während die oben genannten Maschinen selbst in der Regel über eine spezielle Datenschnittstelle verfügen, über welche Fehlermeldungen und Statusberichte ausgegeben werden können, werden Transportsystemdaten nicht (1. Fall) oder nur stark aggregiert, basierend auf Einschaltgruppen (2. Fall), für übergeordnete IT-Systeme zur Verfügung gestellt.

Im 1. Fall (keine Anbindung von Transportsystemdaten) herrscht keine Transparenz (historisch/live) über Zustand des Transportsystems. Eine Analyse der Abfüllanlage beschränkt sich somit auf Maschinendaten und es entstehen "Blinde Flecken".

Im 2. Fall (Anbindung von aggregierten Transportsystemdaten) gibt es Nachteile in der Kommissionierung durch einen Kompromiss zwischen generischer SPS-Implementierung (wenig Aufwand in der Kommissionierung, steigender Aufwand durch fehlende Transparenz in der Analyse auf BDE-System), oder maßgeschneiderter anlagenabhängiger, individueller SPS-Implementierung (hoher Aufwand auf SPS-Ebene, Ressourcen- und Skalierungsprobleme durch notwendiges Expertenwissen, keine Vergleichbarkeit von Anlagen durch Individualität, leicht reduzierter Aufwand in Analyse durch verbesserte Transparenz).

Aus den Einschaltgruppen, so wie sie aktuell existieren, ist nicht ersichtlich, welche Funktionen diese Einschaltgruppe erfüllt. Dies ist je nach Linien-Layout und/oder für jeden Kunden individuell und unterschiedlich.

Eine Datenschnittstelle in bestehenden Systemen basiert auf Einschaltgruppen-Status. Es gibt zwar prinzipiell auch Meldungstexte, die einen Hinweis geben können, welche Funktion der Einschaltgruppe gestört ist, allerdings kann eine Einschaltgruppe immer nur eine aktive Störung anzeigen. Dies macht es sehr schwierig einen Status zu einer Einschaltgruppe zusammenzufassen und Transparenz über den Status zu schaffen.

Transportsystemdaten (wie beispielsweise Zustände, Fehlermeldungen, Weichenstellungen) sind essenziell zur Beurteilung von Produktionsunterbrechungen, Bewertung von Linienkennzahlen sowie für Potentialanalysen zur Erhöhung der Gesamtanlageneffektivität.

Es besteht daher Bedarf für verbesserte Maschinenlinien und verbesserte Verfahren zum Bereitstellen von Betriebszuständen eines Transportsystems in einer Maschinenlinie.

Die Aufgabe wird erfindungsgemäß durch ein Verfahren gemäß Anspruch 1 und eine Maschinenlinie gemäß Anspruch 8 gelöst. Ausführungsformen und Weiterbildungen sind in den Unteransprüchen erfasst.

Eine Ausführungsform der Erfindung betrifft ein Verfahren zum Bereitstellen von Betriebsdaten eines Transportsystems in einer Maschinenlinie, insbesondere in einer Maschinenlinie zum Abfüllen und Verpacken von Lebensmitteln und/oder Getränken bereitgestellt. Die Maschinenlinie umfasst eine Vielzahl von Maschinen und wenigstens ein Transportsystem. Mindestens ein Materialfluss der Maschinenlinie umfasst das Transportsystem und mindestens eine der Maschinen. Das Transportsystem umfasst ein oder mehrere Geräte. Das Verfahren startet mit dem Erstellen eines oder mehrerer funktionalen Module. Jedes des einen oder der mehreren funktionalen Module erfüllt eine bestimmte standardisierte Funktion innerhalb der Maschinenlinie. Jedes des einen oder der mehreren funktionalen Module repräsentiert eines oder mehrere der Geräte entlang eines Materialflusses innerhalb der Maschinenlinie funktional. Danach wird für jedes des einen oder der mehreren funktionalen Module eine standardisierte speicherprogrammierbare Steuerungs-, SPS-, Schnittstelle zum Ausgeben von standardisierten Informationen als die Betriebsdaten des funktionalen Moduls bereitgestellt. Die Betriebsdaten umfassen einen Status, einen Betriebsparameter oder eine Fehlermeldung des funktionalen Moduls.

Eine Ausführungsform der Erfindung betrifft eine Maschinenlinie, in der das obige Verfahren implementiert ist.

Beispielhafte Aspekte der Erfindung sind in den Zeichnungen dargestellt. Es zeigen:
**Figur 1****:** einen beispielhaften Ausschnitt aus einer Abfüllanlage;
**Figur 2****:** einen beispielhaften Ausschnitt aus einer Abfüllanlage, wie er in Linienmanagementsystemen aus dem Stand der Technik bekannt ist;
**Figur 3****:** einen beispielhaften Ausschnitt aus einer Abfüllanlage gemäß Ausführungsformen der Erfindung in Linienmanagementsystemen;
**Figur 4****:** eine beispielhafte Anlagenkonfiguration für PET-Behälter und Klebegebinde;
**Figur 5****:** eine beispielhafte Anlagenkonfiguration für PET-Behälter und Schrumpfpacker;
**Figur 6****:** eine beispielhafte Anlagenkonfiguration für Dosen oder Glasflaschen; und
**Figur 7****:** eine beispielhafte Anlagenkonfiguration für Dosen.

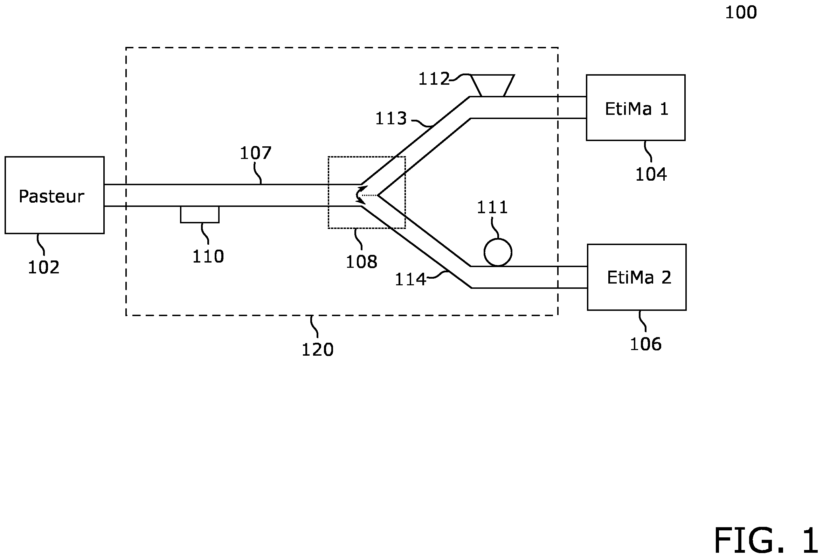

Figur 1 zeigt einen beispielhaften Ausschnitt aus einer Abfüllanlage (Maschinenlinie) 100, wie sie üblicherweise vorkommt. Dabei sind in Figur 1 drei Maschinen gezeigt. Die drei Maschinen sind ein Pasteur 102, eine Etikettiermaschine (EtiMa) 104 und eine zweite EtiMa 106. Die Maschinen 102, 104 und 106 sind üblicherweise selbst mit Sensoren und Datenschnittstellen ausgestattet, so dass diese regelmäßig vom Benutzer gesteuert werden können und ihren Betriebsstatus übermitteln können.

Die Maschinen 102, 104 und 106 sind über ein Transportsystem miteinander verbunden, welches die Transporteure 107, 113, 114 und die Weiche 108 umfasst. Das Transportsystem setzt sich somit zusammen aus einem Netzwerk aus Transporteuren 107, 113, 114, einer Weiche 108 und weitere kleinere Geräte, die beispielhaft in Figur 1 als Elemente 110, 111 und 112 gezeigt sind.

Beispiele für solche Geräte 110, 111, 112 können ein Datierungssystem, ein Kartonverschließer, ein Leergebindespeicher oder ähnliche Geräte sein. Dies sind jedoch nur Beispiele und insbesondere können die Geräte alle möglichen der folgenden Geräte sein: Geräte, die Packungen/Verpackungskomponenten bearbeiten (insbesondere datieren, verschließen, umwickeln, und/oder trocknen) und/oder Geräte, die Packungen/Verpackungskomponenten inspizieren (insbesondere wiegen und/oder optisch inspizieren) und/oder Geräte, die den Materialfluss von Packungen/Verpackungskomponenten steuern (insbesondere transportieren, zusammenführen, ausschleusen, umleiten, puffern, zuführen, und/oder abgeben).

Charakteristisch für diese Geräte 110, 111, 112 und auch die Weiche 108 ist, dass diese in der Regel keine Anbindung von Transportsystemdaten oder nur eine Anbindung von aggregierten Transportsystemdaten aufweisen. Beispielsweise sind diese Elemente und gegebenenfalls auch die Transporteure zu einer Einschaltgruppe 120 zusammengefasst, so dass diese Einschaltgruppe 120 nur einen gesamten Zustand ausgeben kann.

Eine Einschaltgruppe umfasst in der Regel sehr viele einzelne Module, die man sonst einzeln ein- oder ausschalten müsste. Daher sind diese in Einschaltgruppen zusammengefasst, die alle zusammen eingeschaltet werden. Diese Einschaltgruppen umfassen jedoch größere Bereiche, die auch unterschiedliche Routen des Produktflusses in einer Einschaltgruppe zusammenfassen können. Daher sind die aktuell existierenden Einschaltgruppen nur sehr begrenzt geeignet, um eine hochauflösende Fehlerpropagation zu erhalten.

Ein Ziel der Erfindung ist die Betriebsdatenbereitstellung, -erfassung, -analyse und Steuerung von Transportsystemen in Getränkeabfüllanlagen. Dies wird gemäß hierin beschriebener Ausführungsformen der Erfindung anhand von sogenannten funktionalen Modulen gelöst.

Die Gesamtaufgabe des Transportsystems unterscheidet sich individuell je Linie, Produkt und Kunde. Dabei kann die individuelle Gesamtaufgabe durch mehrere standardisierte Funktionen erfüllt werden. Die Bausteine, aus denen ein Transportsystem gemäß Ausführungsformen bestehen kann, können in Funktionen gekapselt werden, um individuelle Statusmeldungen und auch Steuerungsschnittstellen für konkret diese Funktionsbausteine bzw. funktionale Module anzubieten.

Funktionen gemäß Ausführungsformen können beispielsweise sein: "Transportieren", "Datieren", "Behälterstrom aufteilen", "Behälterstrom umleiten", "Behälterstrom zusammenführen", "Leerpaletten speichern", "Behälter trocknen", "Kartons verschließen", "Behälter inspizieren" usw. Die jeweilige Gesamtaufgabe des Transportsystems setzt sich somit aus mehreren standardisierbaren funktionalen Modulen zusammen, die auch mehrmals im Gesamtsystem auftreten können. Diese funktionalen Module, die jeweils eine Funktion/Aufgabe erfüllen, können auf der SPS (Automatisierungstechnik) gekapselt werden.

Dies kann gemäß einigen Ausführungsformen wie folgt geschehen.

Zunächst kann eine SPS (speicherprogrammierbare Steuerung) für jedes dieser Module eine standardisierte Schnittstelle bereitstellen. Dies ermöglicht die Bereitstellung relevanter Informationen über Funktion und Schnittstelle zur Steuerung von funktionalen Modulen, wie später beschrieben. Über die Schnittstelle soll ein funktionales Modul gesteuert und Betriebszustände von ihm abgerufen werden können.

Gemäß Ausführungsformen kann ein Betriebsdatenerfassungssystem diese standardisierten, relevanten Informationen aufzeichnen und zur weiteren Verwertung/Auswertung ausgeben. Die Analyse der Linienfunktion, Berechnung von Transportsystemkennzahlen und Reports, Visualisierung der Anlage, etc. kann diese standardisierten Informationen nutzen.

Wie bereits beschrieben, kann ein Linienmanagementsystem die Schnittstelle der funktionalen Module nutzen um diese zu steuern (z.B. den Produktstrom durch die Linie zu beeinflussen oder Einstellungen für einen Drucker zu ändern, usw.).

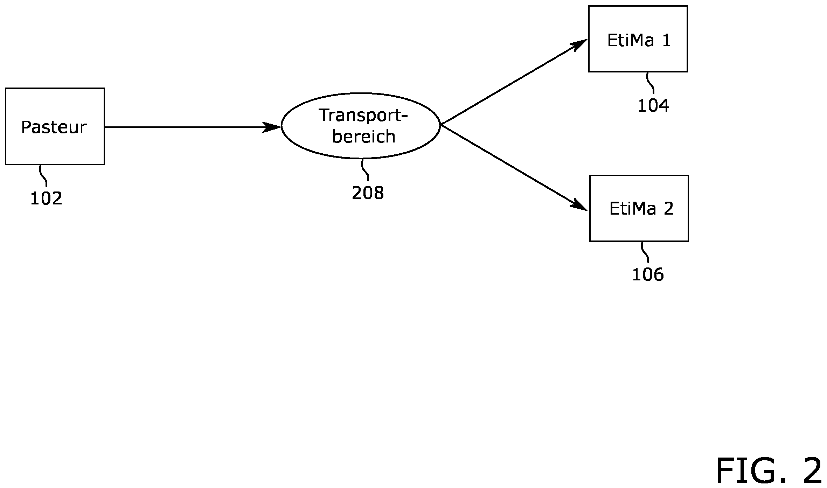

Beim Erstellen der funktionalen Gruppen muss der Materialfluss durch die Maschinenlinie berücksichtigt werden. Dies wird insbesondere an dem Beispiel aus Figur 1, welches in den Figuren 2 und noch weiter ausgeführt wird, gezeigt.

In Figur 2 ist eine Darstellung des Maschinenlinienabschnitts gezeigt, wie sie im Stand der Technik in beispielsweise einem Linienmanagementsystem visualisiert ist. Dabei ist lediglich gezeigt, dass die Maschinen 102, 104 und 106 über einen Transportbereich 208 miteinander verbunden sind. Jedoch ist nicht ersichtlich, welche Elemente sich hinter dem Transportbereich 208 befinden und es kann bei einer Störung im Transportbereich 208 auch nicht gezeigt werden, wo in dem Transportbereich - welcher aus mehreren Abzweigungen bestehen kann - der Fehler aufgetreten ist, da eine Produktionsanlage aus Maschinen besteht, die über Transportsysteme miteinander verbunden sind, ähnlich wie Verkehrsnetz mit Abzweigungen, Zusammenführungen, dynamischen Abzweigungen während des Produktionsprozesses usw.

Um diesen Transportbereich 208 in Figur 2 besser auflösen zu können wird gemäß Ausführungsformen der Erfindung beim Schneiden (d.h. Erstellen) der funktionalen Module, diese so erstellt, dass klar ist, wie der Produktstrom ist. Es dürfen also keine funktionalen Module überlappend über mehrere Routen geschnitten werden, um jederzeit den Materialfluss und den Betriebsstatus darstellen zu können.

Wenn eine Weiche in dem Transportsystem enthalten ist und der Produktionsfluss für einen bestimmten Teil-Produktionsprozess in eine erste Richtung geht und die Einschaltgruppe aber Elemente des ersten (z.B. linken) und des zweiten (z.B. rechten) Transportsystems umfassen würde, dann wüsste man nicht, welche Route genau von einer Störung betroffen ist.

Daher werden in Ausführungsformen der Erfindung die funktionalen Module so geschnitten, dass sie einen festen Teil einer Route mit unveränderbarem Materialfluss umfasst. Die Weiche kann beispielsweise als eigene standardisierte Funktion - d.h. als eigenes funktionales Modul - beschrieben/verwendet/erstellt/typisiert werden.

Wenn die Weiche dann selbst eine Störung aufweist, kann die Weiche als standardisierte Funktion eine Information umfassen, die über die SPS-Schnittstelle ausgegeben werden kann, wie beispielsweise: "Aktueller Fluss nach links/rechts gesteuert". Obwohl es viele verschiedene Ausführungen von Weichen gibt, die physikalisch unterschiedlich funktionieren, kann jede Weiche dennoch diese standardisierte Meldung über die SPS-Schnittstelle ausgeben.

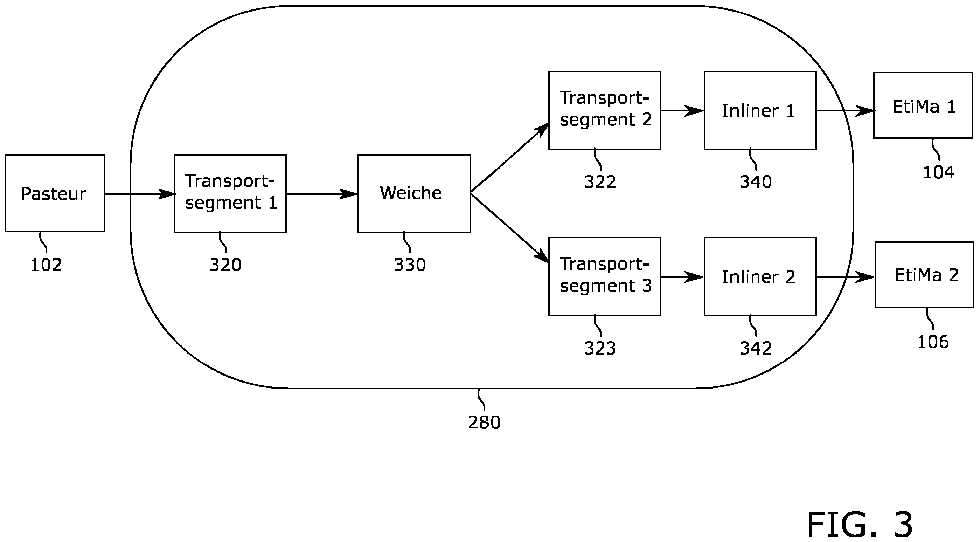

Wie in Figur 3 gezeigt, kann somit eine höhere Auflösung des Transportbereichs erreicht werden, indem die funktionalen Module - ähnlich wie auf einer Landkarte - miteinander verbunden und es ist somit möglich ist, auf einer Übersicht zu jedem Zeitpunkt den Status jedes funktionalen Moduls und somit den Materialfluss auszugeben.

Aus dieser Verknüpfung von funktionalen Gruppen, die über jeweilige SPS-Schnittstellen miteinander verbunden sind, kann eine mögliche Fehlerpropagation erkannt werden. Mittels der Information der funktionalen Module kann ein System abschätzen, an welcher Stelle bestimmte Störungen welche Auswirkungen haben können, wie beispielsweise Produktionsunterbrechungen, Verklemmungen, Mangel von transportiertem Material usw.

In dem Beispiel von Figur 3 ist zu sehen, wie das Transportsystem 208 aus Figur 2 mittels funktionaler Module weiter aufgelöst werden kann. Das Transportsystem 208 umfasst die funktionalen Module Transportsegment 320, 322, 323, die Weiche 330 und die Inline 340 und 343. Diese funktionalen Module aus Figur 3 können jeweils eine einzelne Maschine oder eine Zusammenfassung mehrerer Maschinen sein, die funktional zusammengefasst sind in ein funktionales Modul.

Die Betriebsdaten eines funktionalen Moduls können durch ein Signal eines Geräts in dem funktionalem Modul oder durch ein Signal von einem oder mehreren Sensoren in dem funktionalen Modul an die SPS-Schnittstelle ausgegeben werden.

Gemäß Ausführungsformen der Erfindung wird ein Verfahren zum Bereitstellen von Betriebsdaten eines Transportsystems in einer Maschinenlinie, insbesondere in einer Maschinenlinie zum Abfüllen und Verpacken von Lebensmitteln und/oder Getränken bereitgestellt. Wie erwähnt, umfasst die Maschinenlinie eine Vielzahl von Maschinen und wenigstens ein Transportsystem. Mindestens ein Materialfluss der Maschinenlinie umfasst das Transportsystem und mindestens eine der Maschinen. Das Transportsystem umfasst ein oder mehrere Geräte.

Das Verfahren startet mit dem Erstellen eines oder mehrerer funktionalen Module. Jedes des einen oder der mehreren funktionalen Module erfüllt eine bestimmte standardisierte Funktion innerhalb der Maschinenlinie. Jedes des einen oder der mehreren funktionalen Module repräsentiert eines oder mehrere der Geräte entlang eines Materialflusses innerhalb der Maschinenlinie funktional.

Danach wird für jedes des einen oder der mehreren funktionalen Module eine standardisierte speicherprogrammierbare Steuerungs-, SPS-, Schnittstelle zum Ausgeben von standardisierten Informationen als die Betriebsdaten des funktionalen Moduls bereitgestellt. Die Betriebsdaten umfassen einen Status, einen Betriebsparameter oder eine Fehlermeldung des funktionalen Moduls.

Mittels der SPS-Schnittstelle können die standardisierten Informationen des einen oder der mehreren funktionalen Module ausgegeben und/oder aufgezeichnet werden.

Durch die funktionalen Module, wie hier in Ausführungsformen beschrieben und der standardisierten Steuerungsschnittstelle des Transportsystems für Abfülllinien ergibt sich eine höhere Transparenz über komplexe Linien. Der sogenannte digitale Zwilling der Maschinenlinie wird verbessert und umfasst eine höhere systematische Auflösung. Durch die hohe Transparenz über komplexe Linien wird der Weg für zahlreiche zukünftige Digitalisierungsproduktevorbereitet.

Weitere Vorteile der hierin beschriebenen Erfindung sind eine höhere Flexibilität für optionale, anwendungsfallbezogene Aggregation durch Bereitstellung granularer Information auf OT-Ebene und geringer kommissionsabhängiger Aufwand in Transportsystemprojektierung durch layoutunabhängige Standardisierung. Die layoutunabhängige Standardisierung mittels funktionaler Module schafft Datenqualität und Vergleichbarkeit, wodurch wenig Expertenwissen zur Kommissionierung notwendig ist.

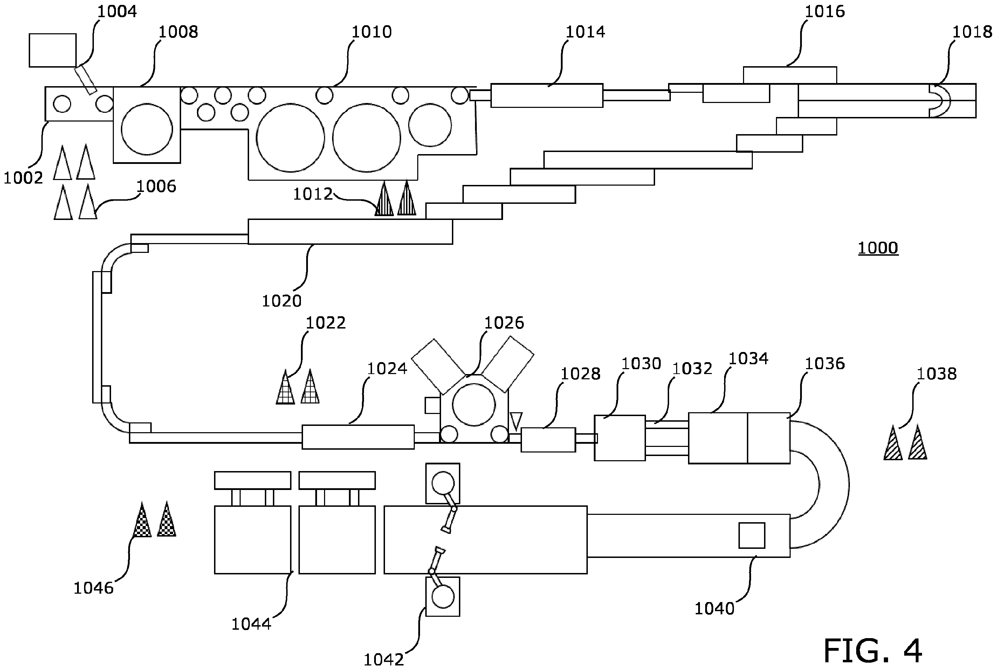

In den folgenden Figuren 4 bis 7 werden verschiedene beispielhafte Anlagenkonfigurationen für verschiedene Flaschenabfüllanlagen beschrieben, in denen die Erfindung oder wenigstens Teile und Aspekte der Erfindung implementiert werden können. Die Beschreibung der Figuren 4 bis 7 soll nur eine allgemeine Übersicht über Maschinen geben, für welche Zustandsdaten gesammelt werden können, auf deren Grundlage das LLM Benutzeranfragen verarbeiten kann.

Figur 4 zeigt eine beispielhafte Anlagenkonfiguration 1000 für PET-Flaschen oder PET-Behälter und Klebegebinde. Wie in Figur 4 zu sehen, umfasst die Anlagenkonfiguration 1000 verschiedenste Module, die eine Linie bilden, an deren Ende fertig abgefüllte PET-Behälter in Form eines Gebindes auf Paletten ausgegeben werden. Einige der Module und Maschinen können dabei optional sein und die Erfindung ist nicht auf die genaue Form und Anordnung der Anlagenkonfigurationen beschränkt.

Die Anlagenkonfiguration 1000 umfasst einen Ofen 1002 für Preforms, eine Preform-Sortierung mit Zuführmaschine 1004 und eine Blasmaschine 1008. Die Module 1002, 1004 und 1008 bilden im Allgemeinen eine Streckblasmaschine, in welcher PET-Behälter aus einem Ausgangsmaterial hergestellt und geformt werden. Die hergestellten PET-Behälter werden weitergeleitet in einen Füller 1010, in dem die Flaschen befüllt werden. Der Füller kann optional einen Rinser umfassen. In den Preforms können sich während der Lagerung oder des Transports verschiedene Partikel wie Staub, Pappe oder Reste von Holzpaletten ablagern. Mit dem Rinser lassen sich diese entfernen. Am Ende des Füllers kann ein Verschließer angeordnet sein, mittels welchem die PET-Behälter nach der Befüllung verschlossen werden.

Optional kann die Anlagenkonfiguration 1000 nach dem Füller 1010 eine Drehvorrichtung umfassen, die bei Heißabfüllung der PET-Behälter zum Einsatz kommt. Über ein oder mehrere Transportbänder 1016, die auch einen Puffer 1018 zum Zwischenladen von befüllten Behältern umfassen können werden die befüllten PET-Behälter zu einem Vereinzeler 1020 und weiter zu einer Trocknungsvorrichtung 1024 geleitet, in welcher die PET-Behälter getrocknet werden.

Nach erfolgter Trocknung werden die PET-Behälter in eine Etikettiermaschine 1026 befördert. Die Etikettiermaschine 1026 kann für verschiedene Etikettiertechniken ausgelegt sein, wie beispielsweise eine Etikettierung mittels Heißleim, Kaltleim, Selbstklebe-Etiketten oder Sleeves. Nach dem Bedrucken oder Etikettieren der PET-Behälter, werden die PET-Behälter durch eine zweite Trocknungsvorrichtung 1028, einen Linienverteiler 1030, Transportbänder 1032, eine Klebegebindeherstellung 1034 und eine Aushärtstrecke zu einem Handle-Applikator geleitet. In der Klebegebindeherstellung 1034 werden die PET-Behälter in bestimmte Gruppengrößen zusammen gruppiert und zu einem Gebinde, wie beispielsweise einem "Sixpack" verpackt. In dem Handle-Applikator wird ein Tragegriff an das Gebinde angebracht, was ein komfortables Tragen des Gebindes ermöglicht. Die fertigen Gebinde werden dann von einem Roboter 1042 zur Lagenherstellung entsprechend angeordnet und von einem Palettierer 1044 auf Paletten verpackt.

In der Anlagenkonfiguration 1000 können an verschiedenen Modulen und Maschinen sogenannte Formatwagen oder Formatregale angeordnet sein, um schnell wechselbare Formatsätze für kurze Umstellzeiten und automatischen Werkzeugwechsel zur Verfügung zu stellen. Beispiele für Formatwagen sind der Formatwagen 1006 für die Blasmaschine 1008, der Formatwagen 1012 für den Füller 1010, der Formatwagen 1022 für die Etikettiermaschine 1026, der Formatwagen 1038 für die Klebegebindeherstellung 1034 und der Formatwagen 1046 für den Palettierer 1044.

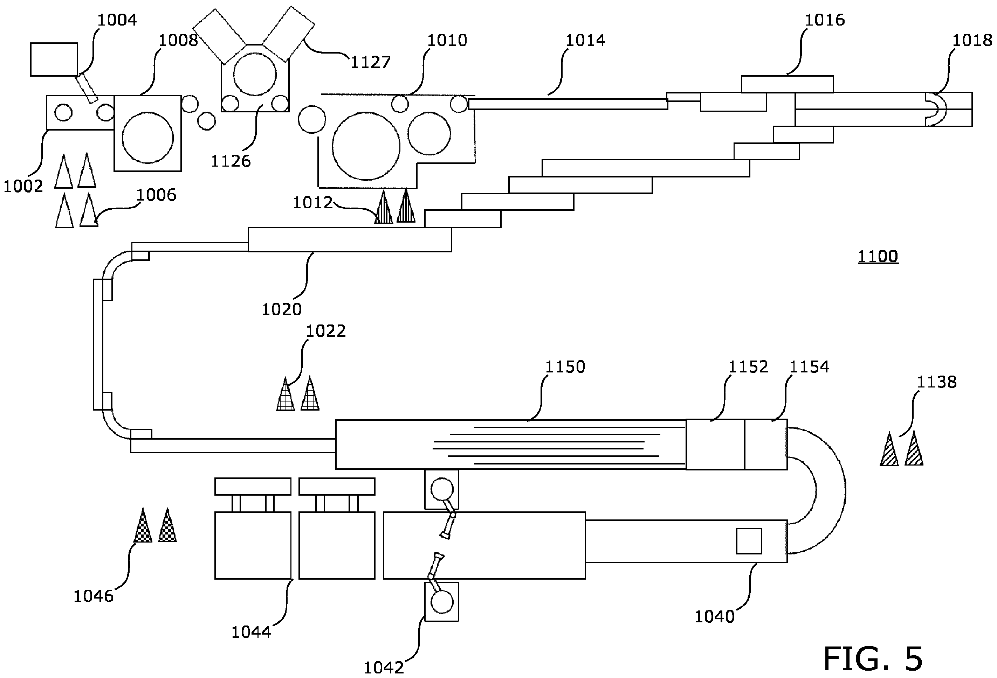

Figur 5 zeigt eine weitere beispielhafte Anlagenkonfiguration 1100 für PET-Behälter und Schrumpfpacker. Die Anlage 1100 aus Figur 5 umfasst viele der Module und Maschinen aus der Anlagenkonfiguration 1000 aus Figur 4, jedoch gibt es einige Unterschiede. Auf die Beschreibung der Module, die bereits in Zusammenhang mit Figur 4 beschrieben sind, wird daher für Figur 5 verzichtet.

Ein wesentlicher Unterschied zwischen den beiden beispielhaften Anlagenkonfigurationen 1000 und 1100 besteht darin, dass die Etikettiermaschine 1126 mit den Etikettiermodulen 1127 bereits nach der Blasmaschine 1008 und vor dem Füller 1008 installiert sein kann. Dafür kann die Anlagenkonfiguration 1100 gleich sechs Transportspuren 1150 umfassen, in die sich die PET-Behälter eindrängeln können. Nachdem die PET-Behälter sich entsprechend in eine der sechs Spuren 1150 eingedrängelt haben, werden sie in das Folieneinschlagmodul 1152 und anschließend in den Schrumpftunnel 1154 befördert.

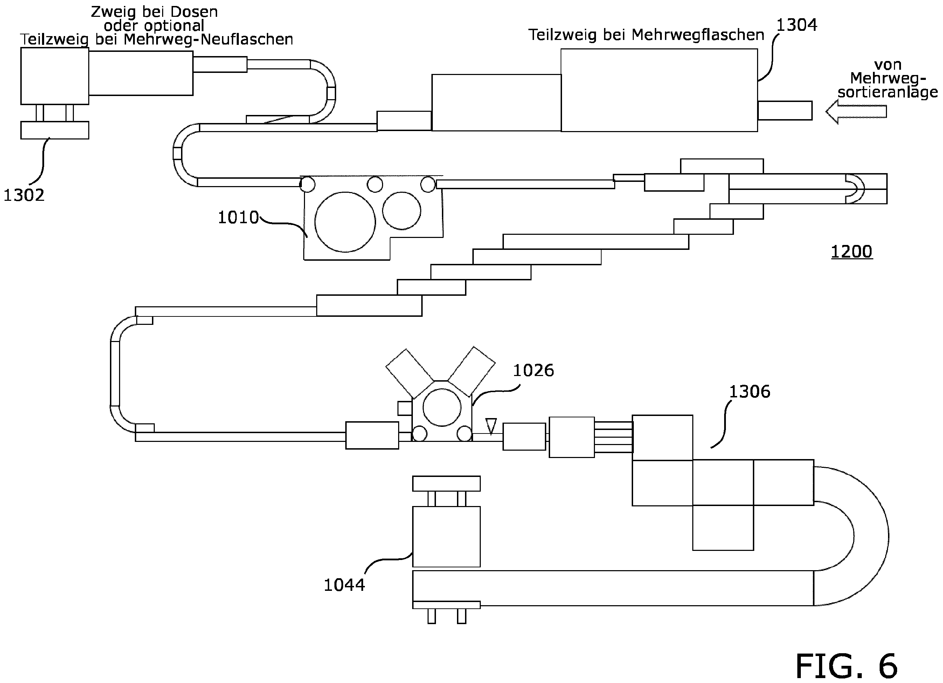

Figur 6 zeigt eine beispielhafte Anlagenkonfiguration 1200 für Dosen oder Glasflaschen. Die beispielhafte Anlagenkonfiguration 1200 aus Figur 6 hat wieder einige Ähnlichkeiten zu den Anlagenkonfigurationen 1000 und 1100 aus Figuren 4 und 5 und die Beschreibung der Anlagenkonfiguration beschränkt sich daher auf die Unterschiede der Anlagenkonfigurationen.

Wie in Figur 6 gezeigt, kann die beispielhafte Anlagenkonfiguration zwei separate Zuführungen umfassen. Eine erste Zufuhr, links in Figur 6, zeigt einen Zweig bei Dosen oder optional einen Teilzweig bei Mehrweg-Neuflaschen. Dabei werden die Behälter, d.h. Dosen oder neue Flaschen, von einem Depalettierer 1302 in die Maschine geführt, wo sie über Transportbänder zu dem Füller 1010 geführt werden. Eine zweite Zufuhr, rechts in Figur 6, zeigt einen Teilzweig bei Mehrwegflaschen, die von einer Mehrwegsortieranlage (nicht abgebildet) in die Anlage eingeleitet werden.

In dem Fall, dass die bereits benutzten Mehrwegflaschen über den Teilzweig bei Mehrwegflaschen in die Anlage 1200 eingeleitet werden, durchlaufen die Mehrwegflaschen zunächst die Reinigungsmaschine oder Waschmaschine 1304. Ein weiterer möglicher Unterschied der beispielhaften Anlagenkonfiguration 1200 ist der Umsetzpacker 1306 nach der Etikettiermaschine 1026. Der Umsetzpacker kann die Flaschen oder Dosen in eine Karton-Clip-Aufbringung oder in Kästen oder beides einsortieren.

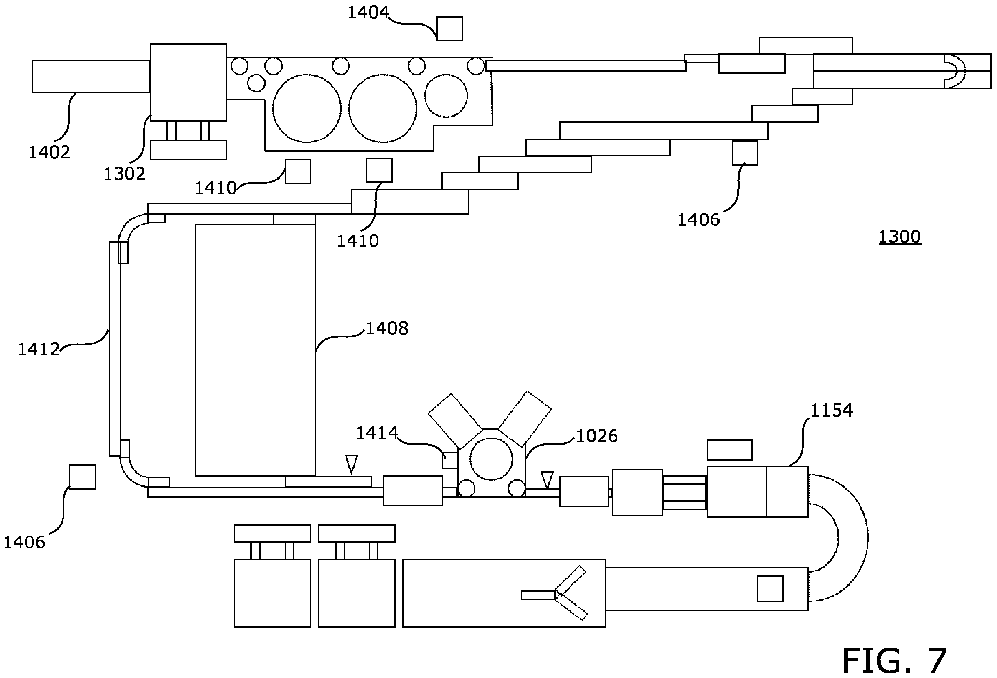

Figur 7 zeigt eine beispielhafte Anlagenkonfiguration 1300 für Dosen, in der wieder die bereits in den anderen Anlagenkonfigurationen beschriebene Elemente nicht mehr beschrieben werden. Die Dosen in der Anlagenkonfiguration 1300 werden von einem Magazin 1402 mit Dosen in den Depalettierer 1302 eingeleitet. Die Dosen werden, nachdem sie den Füller durchlaufen haben und gefüllt sind mittels Verschlussmagazin 1404 verschlossen und über die Transportbänder, wie oben beschrieben, weiter entlang der Anlage 1400 geleitet.

Der optionale Pasteur 1408 kann über den Bypass 1412 umgangen werden, falls dieser nicht benötigt wird. Im Pasteur 1408 können die frisch abgefüllten Produkte für die Konservierung pasteurisiert werden.

Im Gegensatz zu den Anlagenkonfigurationen 1000, 1100 und 1200 sind in der beispielhaften Anlagenkonfiguration 1300 verschiedene Tanks für entsprechende Verbrauchsgüter gezeigt, wie die Tanks 1410 mit Rinsflüssigkeit und/oder dem Abfüllprodukt und den Tanks 1406 mit Bandschmiermittel. Diese Tanks können auch in den bereits oben beschriebenen beispielhaften Anlagenkonfigurationen enthalten sein. In die Tanks 1406 und 1410 können beispielsweise die chemischen Produkte 106, die aus dem Mischer 110 zu den Maschinen geleitet wird, gespeichert werden.

## Patentansprüche

1. Verfahren zum Bereitstellen von Betriebsdaten eines Transportsystems in einer Maschinenlinie, insbesondere in einer Maschinenlinie zum Abfüllen und Verpacken von Lebensmitteln und/oder Getränken, wobei die Maschinenlinie eine Vielzahl von Maschinen und wenigstens ein Transportsystem umfasst, wobei:
mindestens ein Materialfluss der Maschinenlinie das Transportsystem und mindestens eine der Maschinen umfasst, und
das Transportsystem ein oder mehrere Geräte umfasst,
wobei das Verfahren umfasst:
Erstellen eines oder mehrerer funktionalen Module, wobei jedes des einen oder der mehreren funktionalen Module eine bestimmte standardisierte Funktion innerhalb der Maschinenlinie erfüllt, und wobei jedes des einen oder der mehreren funktionalen Module eines oder mehrere der Geräte entlang eines Materialflusses innerhalb der Maschinenlinie funktional repräsentiert;
Bereitstellen, für jedes des einen oder der mehreren funktionalen Module, einer standardisierten speicherprogrammierbaren Steuerungs-, SPS-, Schnittstelle zum Ausgeben von standardisierten Informationen als die Betriebsdaten des funktionalen Moduls, wobei die Betriebsdaten einen Status, einen Betriebsparameter oder eine Fehlermeldung des funktionalen Moduls umfassen; und
Aufzeichnen oder Ausgeben, mittels der SPS-Schnittstelle, der standardisierten Informationen des einen oder der mehreren funktionalen Module.

2. Verfahren nach Anspruch 1, wobei das eine oder die mehreren funktionalen Module des Weiteren angepasst sind, um über die SPS-Schnittstelle gesteuert zu werden.

3. Verfahren nach Anspruch 1 oder 2, wobei das eine oder die mehreren Geräte umfassen:
Geräte, die Packungen/Verpackungskomponenten bearbeiten, insbesondere datieren, verschließen, umwickeln, und/oder trocknen; und/oder
Geräte, die Packungen/Verpackungskomponenten inspizieren, insbesondere wiegen und/oder optisch inspizieren; und/oder
Geräte, die den Materialfluss von Packungen/Verpackungskomponenten steuern, insbesondere transportieren, zusammenführen, ausschleusen, umleiten, puffern, zuführen, und/oder abgeben.

4. Verfahren nach einem der Ansprüche 1 bis 3, wobei ein funktionales Modul so erstellt wird, dass es einen festen Teil einer Route innerhalb der Maschinenlinie mit unveränderbarem Materialfluss umfasst.

5. Verfahren nach einem der Ansprüche 1 bis 4, wobei die standardisierten Informationen des einen oder der mehreren funktionalen Module zur Analyse einer Linienfunktion, zur Berechnung von Transportsystemkennzahlen und Reports, und/oder zur Visualisierung der Maschinenlinie verwendet werden.

6. Verfahren nach einem der Ansprüche 1 bis 5, wobei die Betriebsdaten eines funktionalen Moduls durch ein Signal eines Geräts in dem funktionalem Modul oder durch ein Signal von einem oder mehreren Sensoren in dem funktionalen Modul an die SPS-Schnittstelle ausgegeben wird.

7. Verfahren nach einem der Ansprüche 1 bis 6, wobei zwei oder mehrere funktionalen Module miteinander verbunden sind und über die jeweilige SPS-Schnittstelle zu jedem Zeitpunkt den Materialfluss zu beschreiben.

8. Maschinenlinie, das ausgelegt ist zum Bereitstellen von Betriebsdaten eines Transportsystems in der Maschinenlinie, insbesondere eine Maschinenlinie zum Abfüllen und Verpacken von Lebensmitteln und/oder Getränken, wobei die Maschinenlinie umfasst:
eine Vielzahl von Maschinen;
wenigstens ein Transportsystem umfasst, wobei:
mindestens ein Materialfluss der Maschinenlinie das Transportsystem und mindestens eine der Maschinen umfasst, und
das Transportsystem ein oder mehrere Geräte umfasst,
ein oder mehrere funktionalen Module, wobei jedes des einen oder der mehreren funktionalen Module eine bestimmte standardisierte Funktion innerhalb der Maschinenlinie erfüllt, und wobei jedes des einen oder der mehreren funktionalen Module eines oder mehrere der Geräte entlang eines Materialflusses innerhalb der Maschinenlinie funktional repräsentiert;
für jedes des einen oder der mehreren funktionalen Module, eine standardisierte speicherprogrammierbaren Steuerungs-, SPS-, Schnittstelle zum Ausgeben von standardisierten Informationen als die Betriebsdaten des funktionalen Moduls, wobei die Betriebsdaten einen Status, einen Betriebsparameter oder eine Fehlermeldung des funktionalen Moduls umfassen, und
wobei die SPS-Schnittstelle ausgelegt ist zum Aufzeichnen oder Ausgeben der standardisierten Informationen des einen oder der mehreren funktionalen Module.

9. Maschinenlinie nach Anspruch 8, wobei das eine oder die mehreren funktionalen Module durch ein Linienmanagementsystem mittels den jeweiligen SPS-Schnittstellen gesteuert werden.

10. Maschinenlinie nach Anspruch 9, des Weiteren umfassend:
wenigstens einen Sensor in einem funktionalen Modul, wobei die Betriebsdaten des funktionalen Moduls durch ein Signal von dem wenigstens einen Sensor an die SPS-Schnittstelle ausgegeben wird.
